# EUROPEAN PATENT SPECIFICATION

(11) **EP 0 578 452 B1**
(45) Date of publication and mention of the grant of the patent: **11.12.1996**
(21) Application number: 93305216.9
(22) Date of filing: 02.07.1993
(51) Int. Cl.: B60N 2/48

(54) **Automotive headrests**
Kopfstütze für Kraftfahrzeuge
Appui-tête pour véhicules automobiles

(30) Priority: 06.07.1992 GB 9214290
(43) Date of publication of application: 12.01.1994
(73) Proprietor: Latchford, James, Rossendale, Lancashire BB4 4BA (GB)
(72) Inventor: Latchford, James, Rossendale, Lancashire BB4 4BA (GB)
(74) Representative: Jennings, Nigel Robin

(56) References cited:
- WO-A-89/11047
- WO-A-92/04847
- CH-A- 442 648
- DE-A- 2 640 163
- US-A- 3 680 912
- US-A- 4 744 601
- US-A- 4 919 483

## Description

The present invention relates to automotive headrests or head restraints, that is to say headrests or head restraints for use in vehicles, e.g. cars or trucks and is concerned with that type of headrest which comprises a first enclosure of flexible material and a second enclosure of flexible material which is sealed, the interior of the first enclosure communicating with the interior of the second enclosure via a flow restrictor.

Conventional car seat headrests are relatively firm and can thus strike the head of the user a substantial blow in the event that the car is struck from the rear. As the head is struck by the headrest, the headrest deforms only to a minor extent which means that the head is not significantly restrained from twisting. The head will thus roll on the headrest on impact if it is not facing directly forward thereby potentially causing injury to the neck. The force of the impact of the headrest on the head is largely stored in the headrest due to compression of the upholstery of the headrest and in the seat frame and is released immediately after the impact by propelling the head forwardly which can again potentially cause injury to the user.

However, the present invention is concerned with headrests which permit the head to sink a substantial distance, e.g. of the order of 5 cm, into them when an impact occurs whereby they serve also as a restraint against lateral movement or rotation and which substantially moderate the force of impact and dissipate a major proportion of the energy absorbed.

A headrest of the type referred to above is disclosed in U.S. Patent No. 3680912 which relates to a headrest including an outer cover within which is a hollow tubular member of elastic material. The hollow tubular member is filled with a fluid and its interior is connected to that of a hollow absorbing member by a tube and a flow resistance. The two hollow members are situated on opposite sides of a rigid partition. The absorbing member is also made of an elastic material and has a greater "contractility" than the tubular member. In the event of an accident, the head of the user presses against the tubular member and forces the fluid in it into the absorbing member against the resilience of the latter and the flow resistance so that the force of the impact is progressively converted into an increased pressure in the absorbing member. The fluid is subsequently returned to the tubular member by the "contractility" of the absorbing member. This headrest will provide a certain lateral and rotational restraint to the head of the user in the event of an accident and the force of the impact is partially absorbed and is not immediately returned to the head of the user due to the presence of the flow resistance.

However, the headrest disclosed in the prior U.S. patent is relatively heavy and bulky due to the presence of a number of different components including, in particular, the rigid partition which must be connected to the load-bearing seat structure to be able to transmit impact loads to it. Its construction is complex and thus expensive and labour-intensive to manufacture and includes two sealed elastic bags which must have different contractilities and be able to retain them. The flow resistance is subject to blockage by foreign particles introduced during manufacture or thereafter and if such blockage occurs the headrest would become springy which is the opposite to that which is required. If either of the elastic bags or the connecting pipe should be punctured the headrest will become wholly inoperative.

Another automotive headrest is known from WO-A-8911047, disclosing in its second embodiment (see figs. 6 to 9) a construction having the features of the preamble of claim 1.

It is the object of the invention to provide an energy-dissipating headrest/restraint for automotive use which does not suffer from the above-mentioned disadvantages and which, in particular, is more effective, simpler, cheaper and more reliable.

According to the present invention an automotive headrest of the type referred to in the preamble of claim 1 is characterised in that the inner enclosure is filled with a compressible resilient filling and a fluid, that the outer enclosure is connected to the inner enclosure over substantially all its area with the exception of that portion which, in use, is directed towards the head of the user and that the outer enclosure is only partially filled, thereby that portion of it which is directed towards the user's head is, when not in use, slack, that portion of its interior which is not occupied by the inner enclosure being occupied by a fluid.

It is preferred that the outer enclosure is connected, e.g. by adhesive to the inner enclosure at its rear surface and preferably also at its top, bottom and side surfaces, i.e. at all surfaces other than that which is contacted by the user's head whereby relative movement of the two enclosures is possible only at the front.

Thus the headrest in accordance with the present invention includes two separate enclosures, as in the prior U.S. patent referred to above, but these enclosures are situated one within the other. This means that if the head of the user comes into violent contact with the headrest, the fluid, which is conveniently air, within the inner enclosure is expelled through the aperture(s) which constitute a flow path of restricted area, which acts as a flow resistance, into the outer enclosure, which is only partially filled. As the two enclosures are deformed by the user's head, the outer enclosure extends to an increasing extent around the sides of the head thereby providing lateral and rotational support and this effect is reinforced by the expulsion of fluid from the inner enclosure into the outer enclosure. The headrest thus yields progressively under an impact load thereby cushioning the user's head and the energy of the impact is largely dissipated by the flow path of restricted area. When the impact loading ceases there is no sudden application of force to the user's head but the inner enclosure is gradually reflated by the resilience of the filling which expands to suck fluid back in through the aperture(s) from the outer enclosure.

The headrest in accordance with the present invention is extremely cheap and simple since it constitutes effectively only one bag within the other, the inner one of which is filled with a resilient filling, such as fibrous or sponge material, and the interior of the inner enclosure communicates with that of the outer enclosure through one or more apertures or perforations in the inner enclosure which are of course very much simpler and cheaper than the complex pipework and flow restrictor valve provided in the prior specification. If the outer enclosure should suffer a minor puncture the headrest will retain its shape and effectiveness and still be capable of absorbing impact loads. Unintentional blocking of the fluid flow from the inner enclosure to the outer enclosure is effectively impossible due to the simplicity of the flow path and the fact that, in practice, this flow path is likely to be constituted by a number of openings in the inner enclosure.

The headrest in accordance with the invention will satisfactorily and comfortably support and cushion the user's head under normal conditions and if an accident should occur the force of the impact between the user's head and the headrest is progressively absorbed whilst the outer enclosure extends progressively around the sides of the user's head and thus restrains it from rotation or moving laterally. It is fabricated from cheap and simple components and will require very little manufacturing time or accuracy and is inherently very light which means that it may be connected to a vehicle seat or head restrainer by a cheap and simple fastener, e.g. cooperating areas of a proprietary loop and pile fastener, such as that sold under the trade mark VELCRO.

The inner enclosure may effectively constitute merely a simple plastic bag and in this event the flow path may constitute one or more perforations formed in it. The total area of these perforations is preferably between 1 and 5 cm² and it will be appreciated that if the area of the flow path is too small the headrest will be effectively too rigid whilst if it is too large it will be too soft. The filling may conveniently comprise fibrous material and the fibres may be either natural or synthetic and all that is important is that the fibrous material is compressible to a small fraction of its initial volume and is also resilient so that it will recover its initial volume when the load is removed from it.

Alternatively, the filling may constitute a body of closed cell foam plastics material, that is to say a body of synthetic sponge material. In this event, it may still be enclosed within a separate perforated plastics bag or alternatively the sponge material may be coated with a layer of gas impermeable plastics material, which constitutes the inner enclosure, over the majority of its surface area, that is to say over all its surface area with the exception of one or more areas which are left uncoated and constitute the aperture(s) connecting the interiors of the inner and outer enclosures.

It may be desirable for the stiffness of the filling to increase non-linearly as it is compressed and this may be conveniently achieved with a closed cell foam plastics filling by ensuring that the density of the foam increases rearwardly, i.e. away from the head of the user. This increase in density and thus stiffness may be progressive or may be produced by connecting two or more layers of different foam with differing stiffnesses together.

If the headrest in accordance with the present invention is attached to a head support or restraint, the headrest itself does not need a further support but if it is connected merely to e.g. one or more bars projecting upwardly from the rear of the seat then the headrest may include a support plate situated at its rear between the inner and outer enclosures, preferably secured, e.g. by adhesive, to one or both of them.

Further features and details of the invention will be apparent from the following description of certain specific embodiments which is given by way of example with reference to the accompanying diagrammatic drawings, in which:-
Figure 1 is a plan view of a first embodiment of a headrest in accordance with the invention shown with the user's head adjacent to it;
Figure 2 is a plan view of the headrest of Figure 1 shortly after the user's head has been forced violently into contact with it;
Figure 3 is a side view of a second embodiment of a headrest in accordance with the invention affixed to a head support attached to a car seat;
Figure 4 is a horizontal sectional view of the headrest of Figure 3;
Figure 5 is a front view of the inner enclosure of the headrest of Figure 3; and
Figure 6 is a view similar to Figure 4 of a third embodiment of the invention.

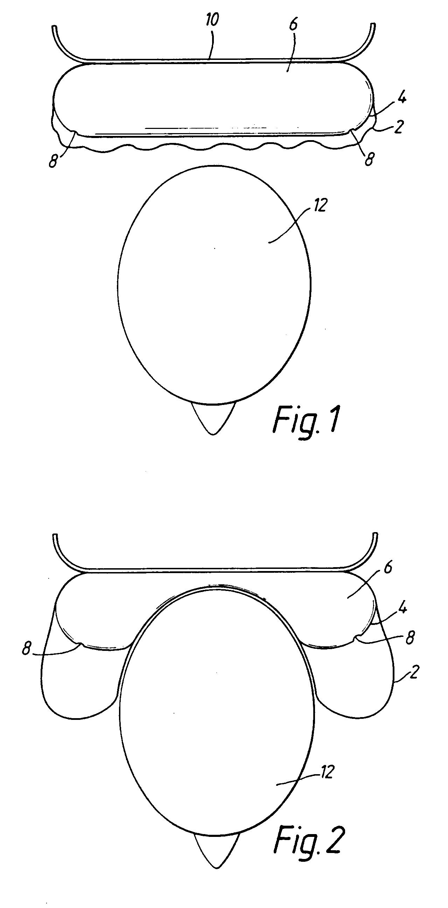

Referring firstly to Figure 1, the headrest comprises a sealed outer bag 2, which in this case is of plastics material but could be of a wide variety of other flexible and substantially air impermeable materials and which is only partially filled with a fluid, in this case air, and is thus relatively slack. A proportion of its interior, which will generally be in excess of 50% and in this case is in the region of 80 to 90% is occupied by a second bag 4, which in this case is of plastics material but could be of a wide variety of other flexible and substantially air impermeable materials and whose interior is filled with a resilient fibrous filling 6, in this case of polyester fibres, and communicates with the interior of the outer plastics bag through a number of small vents or perforations 8, of which only two are shown in the figure and whose total area is about 2 cm². The fibrous filling 6 is such that, when no load is applied, the fibres are spaced apart and the filling therefore contains a substantial proportion of air. The outer bag 2 is connected to the inner bag 4 by adhesive over its side, top, bottom and rear surfaces and is thus loose and free to move substantially only at its front surface.

In Figure 1 the headrest is shown in the unloaded state attached to a seat back 10 and the head 12 of the user is shown spaced from it. If the vehicle should be subjected to an impact load from behind the head 12 of the user is thrown violently into contact with the surface of the outer bag 2 which is pressed immediately into contact with the surface of the inner bag 4 which is progressively compressed under the load, as shown in Figure 2. The rate of compression of the inner bag is governed substantially by the rate at which air can be expelled from the inner bag through the perforations 8 into the interior of the outer bag. The side portions of the outer bag, and progressively also of the inner bag, are progressively forced forwardly in contact with the sides of the user's head as the inner bag is compressed and this effect is promoted by the expulsion of air from the inner bag into the outer bag. The force of the impact between the user's head and the headrest is thus progressively absorbed by the inner bag and the energy of the impact is essentially dissipated by the flow of the air through the perforations 8. The user's head is thus cushioned by the headrest and prevented from coming into violent contact with the seat back 10 and is also prevented from moving laterally or rotating by the contact of the outer bag with the sides of the user's head.

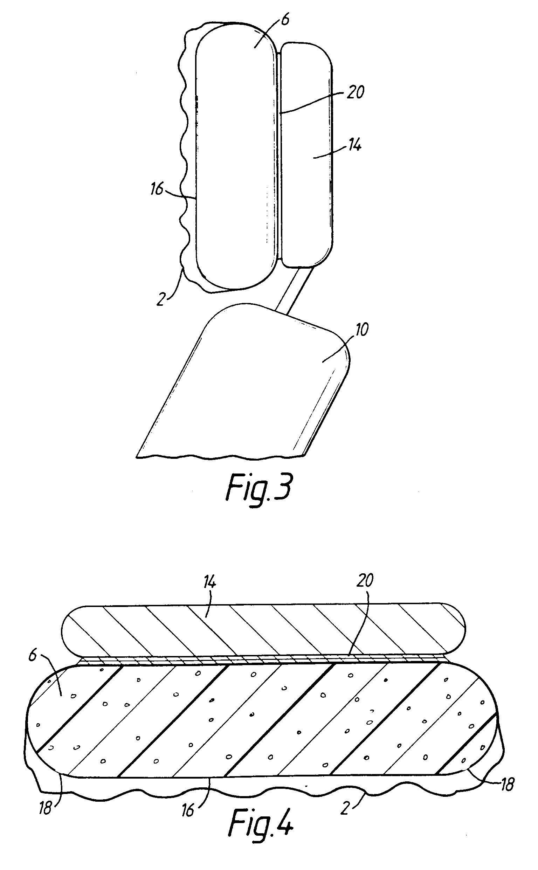

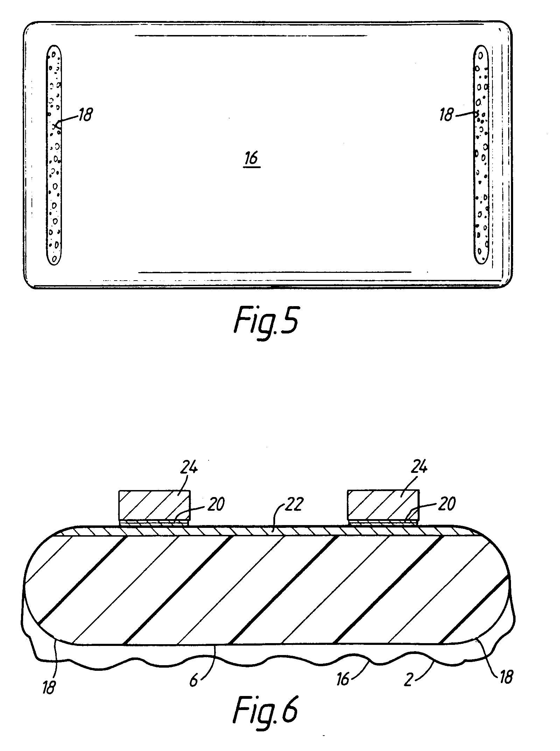

The headrest of the embodiment of Figures 3, 4 and 5 is shown attached to a head restraint 14 projecting upwardly from the seat 10. In this case, the resilient filling 6 is constituted by a body of open cell foamed plastics material similar to a synthetic bathroom sponge with relatively large voids of up to 0.05cm³. The outer enclosure is again constituted by a sealed plastics bag 2. However, the inner enclosure is constituted by a layer of substantially gas-impermeable plastics material 16 which is applied and adhered to the entire surface of the sponge material 6 with the exception of two elongate areas or strips 18, as best seen in Figure 5. The two areas 18 constitute the apertures through which the interior of the inner enclosure communicates with that of the outer enclosure. Due to the fact that the headrest of this embodiment is so very light, it may be connected to the head restraint 14 by a very light connection, in this case a loop and pile connection 20 which means that the headrest may of course be readily removed from the vehicle seat, e.g. to replace or wash it.

The headrest shown in Figures 3 to 5 requires no rigid head support plate since the necessary reactive load under accident conditions is provided by the head restraint plate 14 which is connected to the vehicle seat. However, if no such head restraint plate is present then the headrest in accordance with the invention may itself include a support plate at the rear of the headrest situated between the inner and outer enclosures. Such a construction is illustrated in Figure 6. The head support plate 22 is in this case secured by adhesive to the gas-impermeable layer 16 at its front surface and to the outer enclosure 2 at its rear surface. In this case, the headrest is connected by two loop and pile connections 20 to spaced upstanding bars 24 connected to the vehicle seat (not shown). In other respects, the embodiment of Figure 6 is similar to that of Figures 3 to 5.

It will be appreciated that numerous modifications may be effected to the embodiments described above. Thus, for instance, the interior of the inner enclosure may communicate with the interior of the outer enclosure not only through the flow path of restricted area, as described above, but also by way of one or more non-return valves which permit gas to flow into the inner enclosure but not out of it. These valves would in no way alter the performance of the headrest under accident conditions but would permit it to resume its normal shape more rapidly when a load applied to it is removed. It will be appreciated that the number of openings in the inner enclosure is of no significance and that it is only their total area which affects the performance of the headrest. The inner enclosure might therefore have only a single opening formed in it or a large number of very small perforations or openings. The filling within the inner enclosure need not be homogeneous but may instead comprise, for instance, layers of two or more different types of open cell foamed plastics material having different compression strengths. This would result in the headrest having non-linear compression characteristics which may be desirable, that is to say may be desirable for the headrest to become increasingly stiff as it becomes progressively compressed.

## Claims

1. An automotive headrest comprising an inner enclosure (4;16) of flexible material situated within an outer enclosure (2) of flexible material which is sealed, the interior of the inner enclosure communicating with the interior of the outer enclosure via a flow restrictor comprising one or more apertures (8; 18) in the inner enclosure, characterised in that the inner enclosure (4; 16) is filled with a compressible resilient filling (6) and a fluid, that the outer enclosure (2) is connected to the inner enclosure (4; 16) over substantially all its area with the exception of that portion which, in use, is directed towards the head of the user and that the outer enclosure (2) is only partially filled, thereby that portion of it which is directed towards the user's head is, when not in use, slack, that portion of the interior of the outer enclosure (2) which is not occupied by the inner enclosure (4; 16) being occupied by a fluid.

2. A headrest as claimed in Claim 1, characterised in that the area of the aperture(s) (8; 18) in the inner enclosure (4; 16) is 1 to 5 cm².

3. A headrest as claimed in Claims 1 or Claim 2, characterised in that the filling (6) comprises fibrous material.

4. A headrest as claimed in Claim 1 or Claim 2, characterised in that the filling 6 comprises a body of closed cell foamed plastics material.

5. A headrest as claimed in Claim 4 characterised in that the density of the closed cell foamed plastics material increases rearwardly.

6. A headrest as claimed in Claims 1 and 4 characterised in that the inner enclosure comprises a layer of impervious plastics material (16) applied to the surface of the body of foamed plastics material (6) over substantially all its area with the exception of one or more areas which constitute the aperture/s (18).

7. A headrest as claimed in any one of the preceding claims characterised by a support plate (22) situated at the rear of the headrest between the inner enclosure (4; 16) and the outer enclosure (2).

8. A vehicle seat characterised in that a headrest as claimed in any one of the preceding claims is secured to it.

9. A seat as claimed in Claim 8 characterised in that the headrest is secured to it by one or more cooperating areas of a loop and pile fastener (20) secured to the seat and to the headrest.

## Patentansprüche

1. Kopfstütze für Kraftfahrzeuge, mit einer in einer äußeren aus flexiblem Material bestehenden verschlossenen Hülle (2) angeordneten inneren Hülle (4; 16) aus flexiblem Material, wobei der Innenraum der inneren Hülle mit dem Innenraum der äußeren Hülle über einen Drosselkörper mit einer oder mehreren Öffnungen (8;18) in der inneren Hülle in Verbindung steht, **dadurch gekennzeichnet**, daß die innere Hülle (4; 16) mit einer komprimierbaren, elastischen Füllung (6) und einem Fluid gefüllt ist, daß die äußere Hülle ((2) mit der inneren Hülle (4; 16) über im wesentlichen ihre gesamte Fläche mit Ausnahme des Teiles, der in Benutzung zu dem Kopf des Benutzers weist, verbunden ist und daß die äußere Hülle (2) nur teilweise gefüllt ist, derart daß ihr zu dem Kopf des Benutzers weisender Teil bei Nichtbenutzung schlaff ist, wobei der Teil des Innenraums der äußeren Hülle (2), der nicht durch die innere Hülle (4; 16) ausgefüllt ist, mit einem Fluid gefüllt ist.

2. Kopfstütze nach Anspruch 1, **dadurch gekennzeichnet**, daß die Fläche der Öffnung(en) (8; 18) in der inneren Hülle (4; 16) zwischen 1 und 5 cm² beträgt.

3. Kopfstütze nach Anspruch 1 oder 2, **dadurch gekennzeichnet**, daß die Füllung (6) faseriges Material enthällt.

4. Kopfstütze nach Anspruch 1 oder 2, **dadurch gekennzeichnet**, daß die Füllung (6) einen Körper aus geschlossenzelligem Schaumstoffmaterial aufweist.

5. Kopfstütze nach Anspruch 4, **dadurch gekennzeichnet**, daß die Dichte des geschlossenzelligen Schaumstoffmateriales nach hinten hin zunimmt.

6. Kopfstütze nach den Ansprüchen 1 und 4, **dadurch gekennzeichnet**, daß die innere Hülle eine Schicht aus undurchlässigem Kunststoffmaterial (16) aufweist, die auf der Oberfläche des Körpers aus Schaumstoffmaterial (6) über im wesentlichen seine gesamte Fläche mit Ausnahme einer oder mehrerer Bereiche, die die Öffnung/en (18) darstellen, angeordnet ist.

7. Kopfstütze nach einem der vorhergehenden Ansprüche, **gekennzeichnet** durch eine Halteplatte (22), die rückseitig an der Kopfstütze zwischen der inneren Hülle (4; 16) und der äußeren Hülle (2) vorgesehen ist.

8. Fahrzeugsitz, **dadurch gekennzeichnet**, daß eine Kopfstütze nach einem der vorhergehenden Ansprüche daran befestigt ist.

9. Fahrzeugsitz nach Anspruch 8, **dadurch gekennzeichnet**, daß die Kopfstütze daran über eine oder mehrere zusammenwirkende Flächen eines an dem Sitz und der Kopfstütze befestigten Klettverschlusses (20) befestigt ist.

## Revendications

1. Appuie-tête pour véhicules automobiles comprenant une enveloppe interne (4 ; 16) en matériau flexible située à l'intérieur d'une enveloppe externe (2) en matériau flexible qui est étanche, l'intérieur de l'enveloppe interne communiquant avec l'intérieur de l'enveloppe externe par l'intermédiaire d'un restricteur de flux comprenant une ou plusieurs ouvertures (8 ; 18) dans l'enveloppe interne, caractérisé en ce que l'enveloppe interne (4 ; 16) est remplie d'un matériau de remplissage résilient compressible (6) et d'un fluide, en ce que l'enveloppe externe (2) est reliée à l'enveloppe interne (4 ; 16) sur sensiblement la totalité de sa surface à l'exception de cette partie qui, lorsqu'elle est utilisée, est dirigée vers la tête de l'utilisateur et en ce que l'enveloppe externe (2) n'est que partiellement remplie, si bien que cette partie de l'enveloppe qui est dirigée vers la tête de l'utilisateur est lâche lorsqu'elle n'est pas utilisée, cette partie de l'intérieur de la surface externe (2) qui n'est pas occupée par l'enveloppe interne (4 ; 16) étant occupée par un fluide.

2. Appuie-tête selon la revendication 1, caractérisé en ce que la surface de la ou des ouvertures (8 ; 18) dans l'enveloppe interne (4 ; 16) est comprise entre 1 et 5 cm².

3. Appuie-tête selon la revendication 1 ou la revendication 2, caractérisé en ce que le remplissage (6) comprend un matériau fibreux.

4. Appuie-tête selon la revendication 1 ou la revendication 2, caractérisé en ce que le remplissage (6) comprend un corps en matériau plastique mousse à alvéoles fermées.

5. Appuie-tête selon la revendication 4, caractérisé en ce que la densité du matériau plastique mousse à alvéoles fermées augmente vers l'arrière.

6. Appuie-tête selon les revendications 1 à 4, caractérisé en ce que l'enveloppe interne comprend une couche de matériau plastique imperméable (16) appliquée sur la surface du corps en matériau plastique mousse (6) sur sensiblement la totalité de sa surface à l'exception d'une ou plusieurs zones qui forment les ouvertures (18).

7. Appuie-tête selon l'une quelconque des revendications précédentes, caractérisé par une plaque de support (22) située à l'arrière de l'appuie-tête, entre l'enveloppe interne (4 ; 16) et l'enveloppe externe (2).

8. Siège de véhicule, caractérisé en ce qu'un appuie-tête selon l'une quelconque des revendications précédentes est fixé sur celui-ci.

9. Siège selon la revendication 8, caractérisé en ce que l'appuie-tête est fixé sur celui-ci par coopération d'une ou plusieurs zones d'un élément de fixation en matériau à boucles et poils (20) fixé au siège et à l'appuie-tête.
